# EUROPEAN PATENT SPECIFICATION

(11) **EP 1 352 014 B1**
(45) Date of publication and mention of the grant of the patent: **14.11.2007**
(21) Application number: 01998582.9
(22) Date of filing: 23.11.2001
(51) Int. Cl.: C08J 3/22, C08L 83/04, B29B 7/48, B29B 7/90

(54) **MIXING**
MISCHEN
MELANGE

(30) Priority: 28.11.2000 GB 0028888
(43) Date of publication of application: 15.10.2003
(73) Proprietor: Dow Corning Corporation, Midland, Michigan 48611 (US)
(72) Inventor: ULZHEIMER, Rudi, 65510 Idstein (DE); REUSS, Stefan, York YO23 1AJ (GB)
(74) Representative: Donlan, Andrew Michael
(86) International application number: PCT/GB2001/005176
(87) International publication number: WO 2002/044247

(56) References cited:
- EP-A- 0 776 751
- EP-A- 0 909 777
- US-A- 5 836 682

## Description

This invention is concerned with improvements in or relating to mixing compositions and to silicone compositions produced by such mixing.

Silicone compositions which can be applied or shaped in fluid condition and then cured are well known. Among such compositions are those which are intended to have a low viscosity during storage and application and yet provide products of high mechanical strength. Such compositions may be used for a variety of purposes and are especially favoured for use in coating or moulding operations in which they become cured, with or without a separate heating operation. Typically such compositions contain reinforcing filler, the most commonly used one being silica, to enhance mechanical properties of the cured product. Whilst assisting in reinforcing the final product, silica also tends to associate progressively with the polysiloxanes present in the fluid composition with corresponding increase in viscosity of the composition. It has become a practice to render the silica hydrophobic by suitable treatment of its surface.

Surface treatment of silica can be done with the silica in dry powder form and before introduction to the silicone composition, but is commonly done in-situ in the composition. Surface treating materials, for example hexamethyldisilazane or divinyltetramethyldisilazane, are therefore usually incorporated with water into the composition of polysiloxane and silica. Commonly, this mixing is done batchwise, but this is a slow process and the product may suffer from significant variations in quality between batches.

Continuous processes for in-situ treatment of silica have been proposed which employ twin screw extruders. The twin screw extruders may be extended in length to achieve mixing of materials but those employed are generally limited to a maximum length of 60 times the diameter of the screw, for engineering reasons. The proposed processes can be inefficient or uneconomic due to lack of residence time of the mixture in the extruder and low throughput of mixture through the extruder. Also, low density fillers contain a high proportion of air which leads to problems when continuously incorporating them into silicone polymers in a twin screw extruder. The rate of incorporation of filler into a composition has been one of the main throughput limitations in a continuous process.

We have now found that mixtures of polysiloxane and reinforcing filler can be prepared with improved efficiency by feeding selected materials to a screw extruder comprising more than two screws located in communicating chambers distributed radially about a common axis and extending with the axis of each screw parallel to the common axis.

The present invention provides in accordance with one of its aspects a process for production of polysiloxane containing mass incorporating surface treated filler material which comprises continuously feeding materials to a screw extruder in which they are mixed and conveyed to an outlet with removal of gaseous materials therefrom, the screw extruder comprising more than two screws located in communicating chambers distributed radially about a common axis and extending with the axis of each screw parallel to the common axis and the materials being mixed in the extruder comprising
a) a polysiloxane having more than 40 siloxane units selected from the group consisting of trialklysilyl end blocked polysiloxanes or polysiloxanes having at least one silicon bonded alkenyl, hydroxyl or hydrolysable group,
b) a reinforcing filler material selected from the group consisting of finely divided silica, surface treated finely divided silica, calcium carbonate, surface treated finely divided calcium carbonate, quartz powder, aluminium hydroxide, zirconium silicate, diatomaceous earth and titanium dioxide;
c) an hydrophobing agent selected from the group consisting of disilazanes with water and polydiorganosiloxanes of up to 40 siloxane units having silicon bonded hydroxyl or amino groups,
each of the materials having been fed into the extruder as the material itself or in admixture with any one or more of the others of (a), (b), and (c).

In a process according to the invention, we prefer to employ an extruder in which three or more screws are spaced around equal angular sectors such for example as more fully described in US patent specification 5836682.

Preferably the screws are confined in a housing having inner and outer casing elements which together define the chambers in which the screws rotate. Preferably the inner and outer casing elements are secured together and disposed with the common axis at least substantially horizontal. Preferably each screw has a plurality of processing elements which closely interengage on adjacent shafts. Preferably the extruder has ten or more, for example twelve, interengaging screws arranged with their axes disposed radially equidistant from the common axis so as to co-operate in mixing and conveying materials through the extruder to its outlet. In a preferred extruder, the twelve screws intermesh closely and are arranged in a circle around a core. Material within the extruder is mixed whilst being caused to move axially of the extruder and in the ring provided by the chambers, as in a spiral. Preferably the length of each extruder screw is from 25 to 60 times the diameter of the screw. Preferably the diameter of each extruder screw is from 20 to 160 mm. In a preferred process according to the invention, the screws are rotated in the same sense and at a speed from 50 to 1200 rpm.

In a process according to the present invention, we prefer to arrange that the interior of the extruder provides at least first, second and third mixing zones spaced along the common axis. Preferably, in a first of the zones a first portion of each screw meshes with a first portion of each of those screws adjacent to it so that the regime in this first zone is predominantly feeding of mixture towards subsequent zones. Preferably in a second of the zones, portions of the screws are arranged to promote intensive kneading and dispersing of the mixture as well as feeding it to subsequent zones. Preferably, in a third zone, portions of the screws are arranged to promote kneading and dispersing of the mixture as well as feeding it towards the outlet. Preferably, there is also a fourth zone in which portions of the screws are arranged to promote further kneading and dispersing of the mixture as well as feeding it,

In a preferred process the first zone has a length of 5 to 30 times the diameter of a screw. Preferably the temperature of material in the first zone is controlled at less than 100°C. Preferably the second zone has a length of 5 to 30 times the diameter of a screw. Preferably the temperature of material in the second zone is controlled at less than 150°C. Preferably, the third zone has a length of 5 to 15 times the length of a screw. Preferably the temperature of material in the third zone is controlled at 100°C to 350°C. Preferably, material in the third zone is subject to reduced pressure. When present, the fourth zone preferably has a length of 5 to 15 times the diameter of a screw. Preferably the temperature of material in the fourth zone when present is controlled at less than 250°C.

The polysiloxanes (a) used in a process according to the invention may be linear or branched and have a viscosity from a fluid to a gum. These materials comprise siloxane chain units XₚR_{q}SiO_{(4-(p+ 1))/2} and chain terminating units preferably of the general formula XR₂SiO_{1/2}, in which each R represents a monovalent hydrocarbon group containing up to 12 carbon atoms, for example methyl or phenyl which may be substituted or not, X represents a group R or an alkenyl, hydroxyl or hydrolysable group, *p* has a value of 0, 1 or 2, *q* has a value of 0, 1 or 2 and the sum of *p* + *q* has a value of 0, 1 or 2.' Preferred polysiloxanes (a) are at least substantially linear materials consisting predominantly of chain units of the general formula R₂SiO where R represents the methyl group. Suitable materials include trimethylsilyl terminated polydimethylsiloxanes having a viscosity of 350mPas or more, methylvinylpolysiloxanes of viscosities from about 2000 to 60000 mPas, αω-dihydroxypolydiorganosiloxanes having viscosities from about 5000 to 11000 mPas and fluorinated polydiorganosiloxanes.

In a process according to the invention, the reinforcing filler (b) may be any of those normally employed in silicone compositions, for example high surface area silicas or calcium carbonates, quartz powder, aluminium hydroxide, zirconium silicate, diatomaceous earth and titanium dioxide. If desired, the reinforcing filler fed to the extruder may consist in whole or in part of surface treated silica or calcium carbonate for example silica which has been rendered hydrophobic by treatment of its surface with silane or silazane.

When a reinforcing filler is used which has not been surface treated to render it hydrophobic, it is preferred to additionally feed an hydrophobing agent (c) to the extruder. Preferably, the hydrophobing agent is selected from the group consisting of disilazanes with water and polydiorganosiloxanes of up to 40 siloxane units having silicon bonded hydroxyl or amino groups. Suitable disilazanes include hexamethyldisilazane and tetramethyldivinyldisilazane. The polydiorganosiloxanes referred to are preferably linear polydiorganosiloxanes having chain units as referred to above.

In a process according to the invention we prefer that one of the materials fed to the extruder is a mixture (e) which is a product formed by mixing polysiloxane (a) and filler (b) (which is preferably fumed or precipitated silica) and optionally other materials. Conveniently such a mixture (e) may be mixed in a separate continuous mixing apparatus for example one which operates by way of a rotor stator mixer with forced axial transport or a twin screw mixer with a very high outer diameter to inner diameter ratio in order to allow a high free volume and is therefore able to mix larger amounts of light fillers, such a twin screw will typically be co-rotating, with overlapping screw agitators which rotate at a consistent speed as the ingredients are fed at various points along its length. Depending on the formulation and the output of this mixer, it may feed directly to the extruder or alternatively the mixing apparatus may feed to a reservoir in which the mixture is stored and aged before delivery to the extruder.

In a process according to the invention, the mixture (e) is preferably a powder or a paste which has been formed by mixing materials (a), (b) and (c) in proportions by weight such that for 100 parts silica there are employed 50 to 180 parts polysiloxane (a). When the material is a paste it preferably contains about 110 to 280, parts by weight of polysiloxane (a) per 100 parts by weight of the filler, and when the mixture (e) is a powder, it preferably contains about 70 to 110 parts by weight of polysiloxane (a) per 100 parts by weight filler. Preferably (c) is present in about 10 to 30, most preferably 15 to 25 parts by weight and d is present in the range of 2 to 10 parts by weight most preferably 3 to 6 by weight per 100 parts by weight filler.

In a process according to the invention, the materials are preferably fed to the screw extruder in proportions to provide in the first second and third zones a ratio of 70 to 180 parts by weight of polysiloxane (a) to 100 parts by weight of filler (b).

A process according to the invention is useful for processing filler/polysiloxane polymer masses generally and is especially suitable for preparation of masterbatches intended for further processing to provide formulations in one or more parts for curing to provide a finished product.

The invention provides in another of its aspects a process for production of a masterbatch for processing into a curable product which comprises continuously feeding materials to a screw extruder in which they are mixed and conveyed to an outlet with removal of gaseous materials therefrom characterised in that the screw extruder comprises more than two screws located in communicating chambers distributed radially about a common axis and extending with the axis of each screw parallel to the common axis and in that the materials fed to the screw extruder consist essentially of
a) a polysiloxane having more than 40 siloxane units selected from the group consisting of trialklysilyl end blocked polysiloxanes and polysiloxanes having at least one silicon bonded alkenyl, hydroxyl or hydrolysable group,
b) a reinforcing filler material comprising any of finely divided silica, calcium carbonate, quartz powder, aluminium hydroxide, zirconium silicate, diatomaceous earth and titanium dioxide,
c) an hydrophobing agent selected from the group consisting of disilazanes and polydiorganosiloxanes of up to 40 siloxane units having silicon bonded hydroxyl or amino groups and
d) water and / or
e) the product formed by mixing any two or more of a), b), c) and d).

In accordance with another aspect of the invention, the materials from the outlet of the extruder may be further compounded with other materials, including for example curatives, catalysts, inhibitors plasticisers, extenders and non-reinforcing fillers.

Curatives which may be incorporated include for example polysiloxanes incorporating silicon-bonded hydrogen atoms for reaction with alkenylpolysiloxanes of the masterbatch, and hydrolysable silanes and siloxanes for reaction with polysiloxanes of the masterbatch having hydroxyl or hydrolysable groups. Catalysts which may be incorporated include, for example, platinum catalysts for the hydrosilylation reaction, organometal salts or complexes for promoting condensation cure, and peroxides. Inhibitors may be incorporated to vary the rate of reaction in the cured product.

Plasticisers and extenders which may be incorporated include for example trimethylsilyl terminated polydimethylsiloxane.

Non reinforcing fillers which may be incorporated may be selected from, for example iron oxide, zinc oxide, carbon black, glass microballoons, and carbonates of calcium, magnesium, barium or zinc and barium sulphate.

Processes according to the invention contribute to improved efficiency of production facilities and yield products of good consistency comparatively quickly.

In order that the invention may become clearer there now follows a description to be read with the accompanying drawings of a process selected for description to illustrate the invention by way of example. In the examples, all parts are by weight and all viscosities were measured at 25°C and it should be understood that Premixes A, B, C and D discussed in the following examples are alternative mixtures referred to above as mixture (e).

In the drawings,

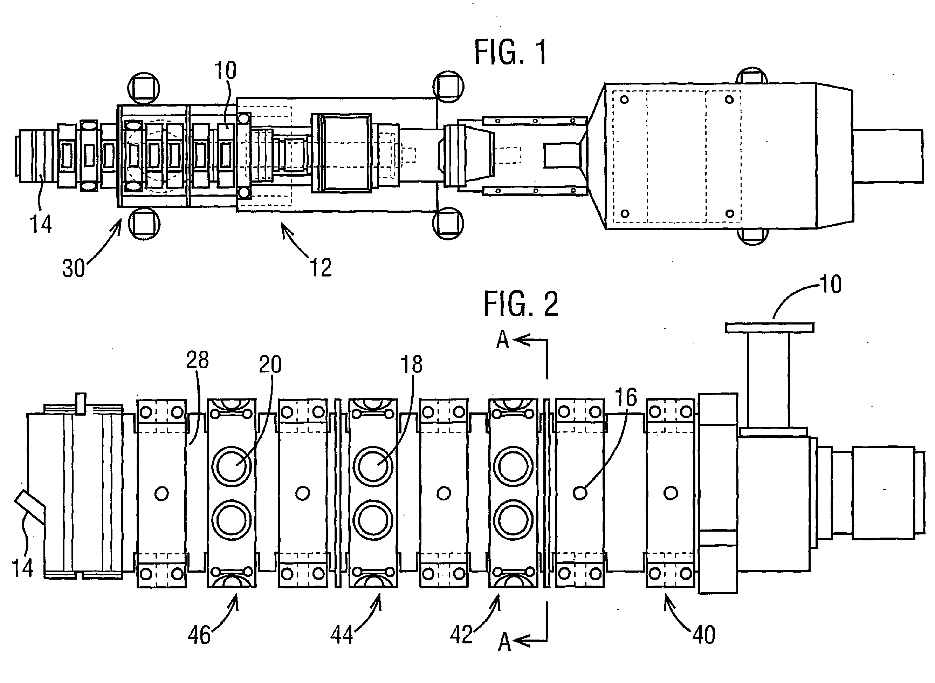

Figure 1 is a plan of a multiple screw extruder used in the illustrative process,
Figure 2 is a side elevation of a portion of the extruder shown in Figure 1,

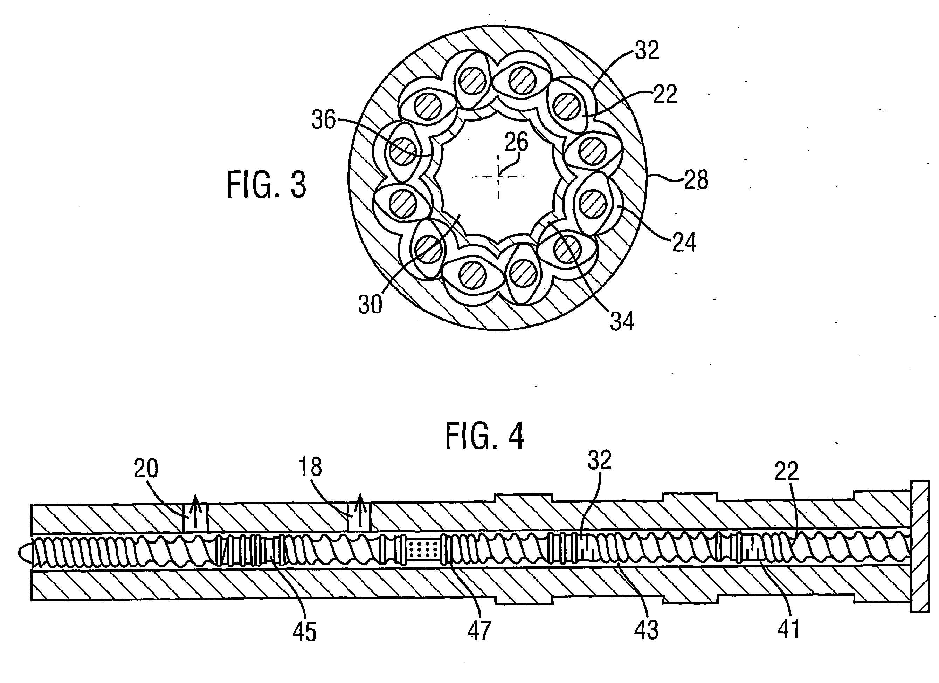

Figure 3 is sectional view taken substantially on the line A-A of Figure 2,
Figure 4 is a diagram of a screw located in the extruder.

The illustrative process is for production of polysiloxane containing masses incorporating surface treated filler material, which comprises continuously feeding materials to an inlet (10) of a screw extruder (12) in which they are mixed and conveyed to an outlet (14) with removal of gaseous materials therefrom via vents (16, 18, 20). The vent (16) may be arranged to vent air from the extruder as mixing is carried out or to feed material into the extruder for mixing with other ingredients. Means are provided for heating and/or cooling various sectors of the extruder as required during operation of the extruder. The screw extruder (12) comprises twelve screws (22) located in communicating chambers (24) distributed radially about a common axis (26) and extending with the axis of each screw parallel to the common axis (26). The extruder comprises a housing having a generally cylindrical outer casing (28) disposed with its axis substantially horizontal and providing the common axis (26). A cavity (30) extends through it about the substantially horizontal common axis (26). The interior of the outer casing (28) is profiled to define a plurality of part cylindrical surfaces (32) equidistant from the common axis and spaced around equal angular sectors around the perimeter of the cavity (30). An inner casing portion (34) of the housing is secured to the outer casing within the cavity (30). Its outer surface is profiled to define part cylindrical surfaces (36) complementary to the surfaces (32) of the outer casing (28). The surfaces (32) and (36) together define the chambers (24) which communicate with adjacent chambers and each receive a screw (22) arranged for rotation about an axis parallel to that of the housing. The diameter of each extruder screw is 30 mm. The length of each extruder screw was 32 times the diameter of the screw. In processes according to the invention, the screws are rotated in the same sense and at a speed from 50 to 1200 rpm.

Each screw 22 has portions profiled to promote desired kneading or feeding of mixture within the extruder. These portions of the screws are positioned on the screws and within the extruder so as to provide a first (40), second (42), third (44) and fourth (46) mixing zones disposed axially in the extruder. In the first zone (40) a first portion (41) of each screw meshes with a first portion (41) of each of those screws adjacent to it so that the regime in this first zone is predominantly feeding of mixture towards subsequent zones. In the second zone (42), portions (43) of the screws are arranged to promote intensive kneading and dispersing of the mixture as well as feeding it to subsequent zones. In the third zone (44), portions (45) of the screws are arranged to promote kneading and dispersing of the mixture as well as feeding it towards the outlet. In the fourth zone (46) portions (47) of the screws are arranged to promote further kneading and dispersing of the mixture as well as feeding it,

In a preferred process the first zone has a length of 5 to 30 times the diameter of a screw and the temperature of material in the first zone is controlled at less than 100°C. The second zone has a length of 5 to 15 times the diameter of a screw and the temperature of material in the second zone is controlled at less than 150°C. The third zone has a length of 5 to 30 times the length of a screw and the temperature of material in the third zone is controlled at 100°C to 350°C. The fourth zone has a length of 5 to 15 times the diameter of a screw and the temperature of material in the fourth zone is controlled at less than 250°C.

Preferably, material in the third zone is subject to reduced pressure of between -100 and -1000 mbar (i.e. between -10⁴ and -10⁵ Pa), pulled via the vents (18, 20).

### Example 1

100 parts of a vinyl functional polydiorganosiloxane having a viscosity of 55,000 mPas (a) were mixed with 100 parts of a fumed silica having surface area of 255 m²/g (b), 22.5 parts of hexamethyldisilazane (c) and 6 parts of water in a twin shaft extruder having an outer diameter: inner diameter ratio of 2.7 to form a powder (Premix A). Premix A was transferred into the feed section of the barrel of a twin screw extruder in which the screws were each of 30 mm diameter and of a length of 45 times their diameter and rotating at 500 rpm. 60 parts of the vinyl functional polydiorganosiloxane (a) were added in the feed section of the twin screw extruder and the mixture was compounded to a uniform paste (in an extruder feed and intensive mixing section of the extruder) having a temperature of less than 100°C. In a third extruder section, the paste was heated to 275°C and exposed to reduced pressure of -900 mbar (-9 x 10⁴Pa) to remove hexamethyldisilazane and water as well as by-products. In a fourth section, a further 71 parts of the polydiorganosiloxane (a) were added to form a homogeneous paste suitable for formulation to provide a curable composition.

The obtained paste was dispensed from the'extruder and cooled. The maximum output of the extruder was 6.6 kg/h. Its viscosity was measured 24 hours after dispensing using a cone and plate viscometer at 10 s⁻¹ shear rate and found to be 1490 mPas.

### Example 2

94 parts of the vinyl functional polydiorganosiloxane having a viscosity of 55,000 mPas (a) used in Example 1 were mixed with 100 parts of the silica (b) used in Example 1,21.4 parts of hexamethyldisilazane (c) and 6.6 parts of water in a rotor stator mixer with forced axial transport to form a powder (Premix B). Premix B was transferred into the inlet (10) of the twelve screw extruder in which the screws were rotating at 230 rpm. 64 parts of the vinyl functional polydiorganosiloxane (a) were added in the feed section of the screw extruder and the mixture was compounded to a uniform paste (in the extruder feed and intensive mixing section of the extruder) having a temperature of less than 100°C. In the third extruder section, the paste was heated to 210°C and exposed to reduced pressure of -900 mbar (-9 x 10⁴Pa) to remove hexamethyldisilazane and water as well as by-products. In the fourth section, a further 73 parts of the polydiorganosiloxane (a) were added and mixing continued to form a homogeneous paste suitable for formulation to provide a curable composition.

The obtained paste.was dispensed from the extruder and cooled. The maximum output of the extruder was 103 kg/hr. Its viscosity was measured, 24 hours after dispensing using a cone'and plate viscometer at 10 s⁻¹ shear rate and found to be 860mPas.

As can be seen from the data, the process used in Example 2 provided a composition of lower viscosity than that of Example 1 with the same overall formulation, indicating better treatment of the silica and better stripping of volatiles. Additionally the throughput achieved in Example 2 is more than 15 times higher compared to Example 1, making the process of Example 2 economically much more attractive than that of Example 1.

### Example 3

91 parts of the vinyl functional polydiorganosiloxane having a viscosity of 55,000 mPas (a) used in Example 1 were mixed with 100 parts of the silica (b) used in Example 1, 20 parts of hexamethyldisilazane (c) and 6 parts of water in a continuous rotor stator mixer with forced axial transport to form a powder (Premix C). Premix C was transferred into the inlet (10) of the twelve screw extruder in which the screws were rotating at 230 rpm. 61 parts of the vinyl functional polydiorganosiloxane (a) were added in the feed section of the screw extruder and the mixture was compounded to a uniform paste (in the extruder feed and intensive mixing section of the extruder) having a temperature of less than 100°C. In the third extruder section, the paste was heated to 210°C and exposed to reduced pressure of -900 mbar (-9 x 10⁴Pa) to remove hexamethyldisilazane and water as well as by-products. In the fourth section, a further 79 parts of the polydiorganosiloxane (a) were added and mixing continued to form a homogeneous paste suitable for formulation to provide a curable composition.

The obtained paste was dispensed from the extruder and cooled. The maximum output of the extruder was 110 kg/hr. Its viscosity was measured, 24 hours after dispensing using a cone and plate viscometer at 10 s⁻¹ shear rate and found to be 822 mPas. A 2mm thick layer of the obtained paste coated onto a plastic foil was observed to have a smooth appearance with no visible particles.

### Example 4:

91 parts of the vinyl functional polydiorganosiloxane having a viscosity of 55,000 mPas (a) used in Example 1 were mixed with 100 parts of the silica (b) used in Example 1, 20 parts of hexamethyldisilazane (c) and 6 parts of water in a rotor stator mixer with forced axial transport to form a powder (Premix D). Premix D was transferred into the inlet (10) of the twelve screw extruder in which the screws were rotating at 230 rpm. 175 parts of the vinyl functional polydiorganosiloxane (a) were added in the feed section of the screw extruder and the mixture was compounded to a uniform paste (in the extruder feed and intensive mixing section of the extruder) having a temperature of less than 100°C. In the second and third extruder sections, the paste was heated to 210°C and exposed to reduced pressure of -900 mbar (-9 x 10⁴Pa) to remove hexamethyldisilazane and water as well as by-products.

The obtained paste was dispensed from the extruder and cooled. The maximum output of the extruder was 150 kg/hr. Its viscosity was measured, 24 hours after dispensing using a cone and plate viscometer at 10 s⁻¹ shear rate and found to be 1729 mPas. A 2mm thick layer of the obtained paste coated onto a plastic foil was observed to have a grainy appearance with many silica particles visible.

The results show that the paste obtained in Example 4 had a higher viscosity than the one produced in Example 3, despite having a higher content of polysiloxane. Additionally, the appearance of the paste obtained in Example 4 had a poorer appearance due to inadequately dispersed filler particles.

## Claims

1. A process for production of polysiloxane containing mass incorporating surface treated filler material which comprises continuously feeding materials to a screw extruder (12) in which they are mixed and conveyed to an outlet (14) with removal of gaseous materials therefrom the screw extruder (12) comprising more than two screws (22) located in communicating chambers (24) distributed radially about a common axis (26) and extending with the axis of each screw parallel to the common axis (26) and materials being mixed in the extruder comprising
a) a polysiloxane having more than 40 siloxane units selected from the group consisting of trialkylsilyl end blocked polysiloxanes and polysiloxanes having at least one silicon bonded alkenyl, hydroxyl or hydrolysable group, and
b) a reinforcing filler material comprising any of finely divided silica, surface treated finely divided silica, or calcium carbonate, surface treated finely divided calcium carbonate, quartz powder, aluminium hydroxide, zirconium silicate, diatomaceous earth and titanium dioxide;
c) an hydrophobing agent selected from the group consisting of disilazanes and polydiorganosiloxanes of up to 40 siloxane units having silicon bonded hydroxyl or amino groups,
each of the materials having been fed into the extruder (12) as the material itself or in admixture with any one or more of the others of (a), (b) and (c).

2. A process according to Claim 1 further **characterised in that** the finely divided filler comprises fumed or precipitated silica.

3. A process according to any preceding Claims further **characterised in that** a mixture (e) comprising polysiloxane (a) and silica (b) in a ratio from 0.7 to 1.8 parts a) to 1 part silica, is fed to the extruder (12).

4. A process according to Claim 3 further **characterised in that** mixture (e) is either a paste or a powder.

5. A process according to claim 3 or 4 further **characterised in that** the mixture (e) is stored in a reservoir after having been mixed and before introduction to the extruder (12).

6. A process according to Claim 5 further **characterised in that** mixture (e) has been aged for a period of not less than ten minutes after mixing and before delivery to the extruder(12).

7. A process according to any of Claims 3 to 6 further **characterised in that** mixture (e) is fed to the extruder (12) from a separate continuous mixing unit where the component materials have a residence time between thirty seconds and five minutes.

8. A process according to any preceding Claim further **characterised in that** the extruder has twelve screws (22) arranged to co-operate in mixing and conveying materials through the extruder (12) to its outlet (14).

9. A process according to Claim 8 further **characterised in that** the length of each extruder screw (22) is from 25 to 60 times the diameter of the screw.

10. A process according to either of Claims 8 and 9 further **characterised in that** the diameter of each extruder screw (22) is from 20 to 160 mm.

11. A process according to any of Claims 8,9 and 10 further **characterised in that** the screws (22) are rotated in the same sense and at a speed from 50 to 1200 rpm.

12. A process according to any preceding Claim further **characterised in that** the interior of the extruder (12) provides zones (40, 42, 44, 46) in a first of which (40) a first portion of each screw meshes with a first portion of each of those screws adjacent to it so that the regime in this first zone (40) is predominantly feeding of mixture towards subsequent zones (42, 44, 46), in a second of which (42) portions of the screws are arranged to promote intensive kneading and dispersing of the mixture as well as feeding it to subsequent zones, (44, 46) and in a third of which (44) portions of the screws are arranged to promote kneading and dispersing of the mixture as well as feeding it towards the outlet (14).

13. A process according to Claim 12 further **characterised in that** the first zone (40) has a length of 5 to 30 times the diameter of a screw and/or the temperature of material in the first zone (40) is controlled at less than 100°C.

14. A process according to either of Claims 12 and 13 further **characterised in that** the second zone (42) has a length of 5 to 15 times the diameter of a screw and /or the temperature of material in the second zone (42) is controlled at less than 150°C.

15. A process according to any of Claims 12, 13 and 14 further **characterised in that** the third zone (44) has a length of 5 to 30 times the length of a screw and / or the temperature of material in the third zone (44) is controlled at 100°C to 350°C.

16. A process according to any of claims 12 to 15 further **characterised in that** the material in the first three zones (40,42,44) of the extruder (12) comprises between 70 and 180 parts of (a) per 100 parts of (b).

17. A process according to any one of Claims 12 to 16 further **characterised in that** material in the third zone (44) is subject to reduced pressure.

18. A process according to any of Claims 12 to 17 further **characterised in that** it comprises a fourth zone (46) in which portions of the screws are arranged to promote kneading and dispersing of the mixture as well as feeding it, this zone having a length of 5 to 15 times the diameter of a screw and/or the temperature of material in the fourth zone (46) is controlled at less than 250°C.

19. A process according to any preceding Claim further **characterised in that** the materials fed to the screw extruder (12) comprise a polysiloxane (a) which is a polysiloxane having more than 40 siloxane units which has at least one silicon bonded alkenyl group and a product (e) formed by mixing finely divided silica, a polysiloxane having more than 40 siloxane units which has at least one silicon bonded alkenyl group, water and an hydrophobing agent comprising a disilazane or polydiorganosiloxanes of up to 40 siloxane units having silicon bonded hydroxyl groups.

20. A process for production of polysiloxane containing mass incorporating surface treated filler material in accordance with any preceding claim which comprises continuously feeding materials to a screw extruder (12) in which they are mixed and conveyed to an outlet (14) with removal of gaseous materials therefrom **characterised in that** the screw extruder (12) comprises more than two screws (22) located in communicating chambers distributed radially about a common axis (26) and extending with the axis of each screw parallel to the common axis (26) and **in that** the materials fed to the screw extruder (12) consist essentially of
a) a polysiloxane having more than 40 siloxane units selected from the group consisting of trialkylsilyl end blocked polysiloxanes, polysiloxanes having at least one silicon bonded alkenyl, hydroxyl or hydrolysable group,
b) a reinforcing filler material comprising any of finely divided silica, calcium carbonate, quartz powder, aluminium hydroxide, zirconium silicate, diatomaceous earth and titanium dioxide,
c) an hydrophobing agent selected from the group consisting of disilazanes and polydiorganosiloxanes of up to 40 siloxane units having silicon bonded hydroxyl or amino groups and
d) water and / or
e) the product formed by mixing any two or more of a), b), c) and d) .

21. A process according to any preceding Claim further **characterised in that**, the materials delivered from the outlet (14) of the extruder are further compounded with other materials, including for example curatives, catalysts, inhibitors plasticisers, extenders and non-reinforcing fillers to provide a curable product.

## Patentansprüche

1. Ein Verfahren zur Herstellung einer polysiloxanhaltigen Masse, welche ein oberflächenbehandeltes Füllmaterial enthält, umfassend das kontinuierliche Einführen von Materialien in einen Schneckenextruder (12), in dem diese gemischt und unter Entfernung der gasförmigen Materialien zu einem Auslass (14) gefördert werden, wobei der Schneckenextruder (12) mehr als zwei Schnecken (22) enthält, die in miteinander in Verbindung stehenden Kammern (24), welche radial um eine gemeinsame Achse (26) verteilt sind, angeordnet sind und sich mit der Achse jeder Schnecke parallel zu der gemeinsamen Achse (26) erstrecken, und die Materialien, die in dem Extruder gemischt werden, umfassen:
a) ein Polysiloxan mit mehr als 40 Siloxaneinheiten, ausgewählt aus der Gruppe bestehend aus trialkylsilylendblockierten Polysiloxanen und Polysiloxanen mit wenigstens einer siliciumgebundenen Alkenyl-, Hydroxyl- oder hydrolysierbaren Gruppe, und
b) ein verstärkendes Füllmaterial, enthaltend irgendeines von feinverteiltem Siliciumdioxid, oberflächenbehandeltem feinverteilten Siliciumdioxid oder Calciumcarbonat, oberflächenbehandeltem feinverteilten Calciumcarbonat, Quarzpulver, Aluminiumhydroxid, Zirconiumsilicat, Diatomeenerde und Titandioxid,
c) ein Hydrophobierungsmittel, ausgewählt aus der Gruppe bestehend aus Disilazanen und Polydiorganosiloxanen mit bis zu 40 Siloxaneinheiten, die siliciumgebundene Hydroxyl-oder Aminogruppen enthalten,
wobei jedes der Materialien in den Extruder (12) als das Material selbst oder in Mischung mit irgendeinem oder mehreren der anderen von (a), (b) und (c) eingeführt wurde.

2. Ein Verfahren nach Anspruch 1, außerdem **dadurch gekennzeichnet, dass** der feinverteilte Füllstoff pyrogene oder gefällte Kieselsäure umfasst.

3. Ein Verfahren nach einem der vorhergehenden Anspruche, außerdem **dadurch gekennzeichnet, dass** eine Mischung (e), die Polysiloxan (a) und Siliciumdioxid (b) in einem Verhältnis von 0,7 bis 1,8 Teile a) zu 1 Teil Siliciumdioxid enthält, in den Extruder (12) eingeführt wird,

4. Ein Verfahren nach Anspruch 3, außerdem **dadurch gekennzeichnet, dass** die Mischung (e) entweder eine Paste oder ein Pulver ist

5. Ein Verfahren nach Anspruch 3 oder 4, außerdem **dadurch gekennzeichnet, dass** die Mischung (e), nachdem sie gemischt wurde, und vor der Einführung in den Extruder (12) in einem Vorratsbehälter gelagert wird.

6. Ein Verfahren nach Anspruch 5, außerdem **dadurch gekennzeichnet, dass** die Mischung (e) für eine Zeitdauer von nicht weniger als 10 min nach dem Mischen und vor der Zuführung in den Extruder (12) gealtert worden ist.

7. Ein Verfahren nach einem der Ansprüche 3 bis 6, außerdem **dadurch gekennzeichnet, dass** die Mischung (e) in den Extruder (12) aus einer separaten kontinuierlichen Mischeinheit eingeführt wird, in der die Komponenienmateriallen eine Verweilzeit zwischen 30 s und 5 min haben.

8. Ein Verfahren nach einem der vorhergehenden Ansprüche, außerdem **dadurch gekennzeichnet, dass** der Extruder zwölf Schnecken (22) hat, die so angeordnet sind, dass sie beim Mischen und Fördern der Materialien durch den Extruder (12) zu dessen Auslass (14) zusammen wirken.

9. Ein Verfahren nach Anspruch 8, außerdem **dadurch gekennzeichnet, dass** die Länge jeder Extruderschnecke (22) dem 25- bis 60 fachen des Durchmessers der Schnecke entspricht.

10. Ein Verfahren nach Anspruch 8 oder 9, außerdem **dadurch gekennzeichnet, dass** der Durchmesser jeder Extruderschnecke (22) 20 bis 160 mm ist.

11. Ein Verfahren nach einem der Ansprüche 8, 9 oder 10, außerdem **dadurch gekennzeichnet, dass** die Schnecken (22) gieichsinnig und mit einer Geschwindigkeit von 50 bis 1200 U/min gedreht werden,

12. Ein Verfahren nach einem der vorhergehenden Ansprüche, außerdem **dadurch gekennzeichnet, dass** das Innere des Extruders (12) Zonen (40, 42, 44, 46) bereitstellt, wobei in einer ersten (40) dieser Zonen ein erster Teil jeder Schnecke mit einem ersten Teil jeder der Schnecken, die zu dieser benachbart sind, ineinandergreift, so dass der Zweck in dieser ersten Zone (40) in erster Linie das Vorschieben der Mischung in Richtung der nachfolgenden Zonen (42, 44, 46) ist, in einer zweiten (42) dieser Zonen Teile der Schnecken so angeordnet sind, dass sie das intensive Kneten und Verteilen der Mischung ebenso wie das Vorschieben in die nachfolgenden Zonen (44, 46) unterstützen, und in einer dritten (44) dieser Zonen Teile der Schnecken so angeordnet sind, dass sie das Kneten und Verteilen der Mischung ebenso wie das Vorschieben in Richtung des Auslasses (14) unterstützen.

13. Ein Verfahren nach Anspruch 12, außerdem **dadurch gekennzeichnet, dass** die erste Zone (40) eine Länge, die dem 5- bis 30fachen des Durchmessers einer Schnecke entspricht, hat und/oder die Temperatur des Materials in der ersten Zone (40) bei weniger ais 100°C geregelt wird.

14. Ein Verfahren nach Anspruch 12 oder 13, außerdem **dadurch gekennzeichnet, dass** die zweite Zone (42) eine Länge, die dem 5- bis 15fachen des Durchmessers einer Schnecke entspricht, hat und/oder die Temperatur des Materials in der zweiten Zone (42) bei weniger als 150°C geregelt wird.

15. Ein Verfahren nach einem der Anspruche 12, 13 oder 14, außerdem **dadurch gekennzeichnet, dass** die dritte Zone (44) eine Länge, die dem 5-bis 30fachen der Länge einer Schnecke entspricht, hat und/oder die Temperatur des Materials in der dritten Zone (44) bei 100°C bis 350°C geregelt wird.

16. Ein Verfahren nach einem der Ansprüche 12 bis 15, außerdem **dadurch gekennzeichnet, dass** das Material in den ersten drei Zonen (40, 42, 44) des Extruders (12) zwischen 70 und 180 Teile von (a) pro 100 Teile von (b) enthält.

17. Ein Verfahren nach einem der Ansprüche 12 bis 16, außerdem **dadurch gekennzeichnet, dass** das Material in der dritten Zone (44) einem reduzierten Druck unterworfen wird.

18. Ein Verfahren nach einem der Ansprüche 12 bis 17, außerdem **dadurch gekennzeichnet, dass** es eine vierte Zone (46) umfasst, in der Teile der Schnecken so angeordnet sind, um das Kneten und Verteilen der Mischung ebenso wie Vorschieben derselben zu unterstützen, wobei diese Zone eine Länge, die dem 5- bis 15fachen des Durchmessers einer Schnecke entspricht, hat und/oder die Temperatur des Materials in der vierten Zone (46) bei weniger als 250°C geregelt wird.

19. Ein Verfahren nach einem der vorhergehenden Ansprüche, außerdem **dadurch gekennzeichnet, dass** die Materialien, die in den Schneckenextruder (12) eingeführt werden, ein Polysiloxan (a), welches ein Polysiloxan mit mehr als 40 Siloxaneinheiten ist, welche wenigstens eine siliciumgebundene Alkenylgruppe enthalten, und ein Produkt (e), gebildet durch Mischen von feinverteiltem Siliciumdioxid, einem Polysiloxan mit mehr als 40 Siloxaneinheiten, welches wenigstens eine siliciumgebundene Alkenylgruppe enthält, Wasser und einem Hydrophobierungsmittel, umfassend ein Disilazan oder Polydiorganosiloxane von bis zu 40 Siloxaneinheiten mit siliclumgebundenen Hydroxylgruppen, umfassen,

20. Ein Verfahren zur einer polysiloxarthaltigen Masse, die ein oberflächenbehandeltes Füllmaterial enthält, gemäß einem der vorhergehenden Ansprüche, umfassend das kontinuierliche Einführen von Materialien in einen Schneckenextruder (12), in dem diese gemischt und unter Entfernung von gasförmigen Materialien zu einem Auslass (14) gefördert werden, **dadurch gekennzeichnet, dass** der Schneckenextruder (12) mehr als zwei Schnecken (22) umfasst, die in miteinander in Verbindung stehenden Kammern, welche radial um eine gemeinsame Achse (26) verteilt sind, angeordnet sind und sich mit der Achse jeder Schnecke parallel zu der gemeinsamen Achse (26) erstrecken, und die Materialien, die dem Schneckenextruder (12) zugeführt werden, im Wesentlichen bestehen aus:
a) einem Polysiloxan mit mehr als 40 Siloxaneinheiten, ausgewählt aus der Gruppe bestehend aus trialkylsilylendblockierten Polysiloxanen, Polysiloxanen mit wenigstens einer siliciumgebundenen Alkenyl-, Hydroxyl- oder hydrolysierbaren Gruppe, und
b) einem verstärkenden Füllmaterial, enthaltend irgendeines von feinverteiltem Siliciumdioxid, Calciumcarbonat, Quarzpulver, Aluminiumhydroxid, Zirconiumsilicat, Diatomeenerde und Titandioxid,
c) einem Hydrophobierungsmittel, ausgewählt aus der Gruppe bestehend aus Disilazanen und Polydiorganosiloxanen mit bis zu 40 Siloxaneinheiten mit siliciumgebundenen Hydroxyl- oder Aminogruppen, und
d) Wasser und/oder
e) dem Produkt, das durch Mischen von irgendwelchen zwei oder mehreren von a), b), c) und d) gebildet wird.

21. Ein Verfahren nach einem der vorhergehenden Ansprüche, außerdem **dadurch gekennzeichnet, dass** die Materialien, die aus dem Auslass (14) des Extruders abgegeben werden, weiter mit anderen Materialien, einschließlich z.B. Hartungsmitteln, Katalysatoren, Inhibitoren, Weichmachern, Streckmitteln und nichtverstärkenden Füllstoffen, vermischt werden, um ein härtbares Produkt bereitzustellen.

## Revendications

1. Procédé de production de poly(siloxane) contenant une masse incorporant un matériau de charge traité en surface qui comprend la délivrance continue de matériaux à une extrudeuse à vis (12) dans laquelle ils sont mélangés et acheminés vers un orifice de sortie (14) avec l'élimination de matériaux gazeux à partir de celui-ci, l'extrudeuse à vis (12) comprenant plus de deux vis (22) situées dans des chambres de communication (24) distribuées de manière radiale autour d'un axe commun (26) et s'étendant avec l'axe de chaque vis parallèle à l'axe commun (26) ; et les matériaux étant mélangés dans l'extrudeuse comprenant
a) un poly(siloxane) ayant plus de 40 motifs siloxane choisis dans le groupe consistant en les poly(siloxanes) à terminaison bloquée trialkylsilyle et les poly(siloxanes) ayant au moins un groupe alcényle, hydroxyle ou hydrolysable lié au silicium, et
b) un matériau de charge renforçante comprenant l'un quelconque parmi la silice finement divisée, la silice finement divisée traitée en surface, ou le carbonate de calcium, le carbonate de calcium finement divisé traité en surface, la poudre de quartz, l'hydroxyde d'aluminium, le silicate de zirconium, la terre de diatomées et le dioxyde de titane ;
c) un agent hydrophobant choisi dans le groupe consistant en les disilazanes et les poly(diorganosiloxanes) de 40 motifs siloxane au maximum ayant des groupes hydroxyle ou amino liés au silicium, chacun des matériaux ayant été délivré à l'extrudeuse (12) en tant que matériau lui-même ou en mélange avec l'un quelconque ou plusieurs parmi les autres de (a), (b) et (c).

2. Procédé selon la revendication 1, **caractérisé en outre en ce que** la charge finement divisée comprend la silice fumée ou précipitée.

3. Procédé selon l'une quelconque des revendications précédentes, **caractérisé en outre en ce qu'**un mélange (e) comprenant du poly(siloxane) (a) et de la silice (b) en un rapport de 0,7 à 1,8 partie de a) sur 1 partie de silice est délivré à l'extrudeuse (12).

4. Procédé selon la revendication 3, **caractérisé en outre en ce que** le mélange (e) est soit une pâte soit une poudre.

5. Procédé selon la revendication 3 ou 4, **caractérisé en outre en ce que** le mélange (e) est stocké dans un réservoir après avoir été mélangé et avant introduction dans l'extrudeuse (12).

6. Procédé selon la revendication 5, **caractérisé en outre en ce que** le mélange (e) a été vieilli pendant une période non inférieure à dix minutes après mélange et avant délivrance à l'extrudeuse (12).

7. Procédé selon l'une quelconque des revendications 3 à 6, **caractérisé en outre en ce que** le mélange (e) est délivré à l'extrudeuse (12) à partir d'une unité de mélange continu séparée où les matériaux composants ont un temps de séjour compris entre trente secondes et cinq minutes.

8. Procédé selon l'une quelconque des revendications précédentes, **caractérisé en outre en ce que** l'extrudeuse a douze vis (22) agencées de sorte à coopérer dans le mélange et l'acheminement de matériaux par l'extrudeuse (12) vers son orifice de sortie (14).

9. Procédé selon la revendication 8, **caractérisé en outre en ce que** la longueur de chaque vis d'extrudeuse (22) est de 25 à 60 fois le diamètre de la vis.

10. Procédé selon l'une ou l'autre des revendications 8 et 9, **caractérisé en outre en ce que** le diamètre de chaque vis d'extrudeuse (22) est de 20 à 160 nm.

11. Procédé selon l'une quelconque des revendications 8, 9 et 10, **caractérisé en outre en ce que** les vis (22) tournent dans le même sens et à une vitesse de 50 à 1 200 tr/min.

12. Procédé selon l'une quelconque des revendications précédentes, **caractérisé en outre en ce que** l'intérieur de l'extrudeuse (12) fournit des zones (40, 42, 44, 46), dans une première zone (40) une première portion de chaque vis s'engrène avec une première portion de chacune de ces vis adjacentes à celle-ci de sorte que le régime dans cette première zone (40) est de façon prédominante la délivrance du mélange vers les zones suivantes (42, 44, 46), dans une deuxième zone (42) des portions des vis sont agencées de sorte à favoriser le malaxage intensif et la dispersion du mélange de même que la délivrance de celui-ci aux zones suivantes (44, 46) et dans une troisième zone (44) des portions des vis sont agencées de sorte à favoriser le malaxage et la dispersion du mélange de même que la délivrance de celui-ci vers l'orifice de sortie (14).

13. Procédé selon la revendication 12, **caractérisé en outre en ce que** la première zone (40) a une longueur de 5 à 30 fois le diamètre d'une vis et/ou la température du matériau dans la première zone (40) est régulée à moins de 100 °C.

14. Procédé selon l'une ou l'autre des revendications 12 et 13, **caractérisé en outre en ce que** la deuxième zone (42) a une longueur de 5 à 15 fois le diamètre d'une vis et/ou la température du matériau dans la deuxième zone (42) est régulée à moins de 150 °C.

15. Procédé selon l'une quelconque des revendications 12, 13 et 14, **caractérisé en outre en ce que** la troisième zone (44) a une longueur de 5 à 30 fois la longueur d'une vis et/ou la température du matériau dans la troisième zone (44) est régulée de 100 °C à 350 °C.

16. Procédé selon l'une quelconque des revendications 12 à 15, **caractérisé en outre en ce que** le matériau dans les trois premières zones (40, 42, 44) de l'extrudeuse (12) comprend entre 70 et 180 parties de (a) pour 100 parties de (b).

17. Procédé selon l'une quelconque des revendications 12 à 16, **caractérisé en outre en ce que** le matériau dans la troisième zone (44) est soumis à une pression réduite.

18. Procédé selon l'une quelconque des revendications 12 à 17, **caractérisé en outre en ce qu'**il comprend une quatrième zone (46) dans laquelle des portions des vis sont agencées pour favoriser le malaxage et la dispersion du mélange de même que la délivrance de celui-ci, cette zone ayant une longueur de 5 à 15 fois le diamètre d'une vis et/ou la température du matériau dans la quatrième zone (46) est régulée à moins de 250 °C.

19. Procédé selon l'une quelconque des revendications précédentes, **caractérisé en outre en ce que** les matériaux délivrés à l'extrudeuse à vis (12) comprennent un poly(siloxane) (a) qui est un poly(siloxane) ayant plus de 40 motifs siloxane qui a au moins un groupe alcényle lié au silicium et un produit (e) formé en mélangeant de la silice finement divisée, un poly(siloxane) ayant plus de 40 motifs siloxane qui a au moins un groupe alcényle lié au silicium, de l'eau et un agent hydrophobant comprenant un disilazane ou des poly(diorganosiloxanes) de 40 motifs siloxane au maximum ayant des groupes hydroxyle liés au silicium.

20. Procédé de production de poly(siloxane) contenant une masse incorporant un matériau de charge traité en surface selon l'une quelconque des revendications précédentes, qui comprend la délivrance continue de matériau à une extrudeuse à vis (12) dans laquelle ils sont mélangés et acheminés vers un orifice de sortie (14) avec l'élimination de matériaux gazeux de celui-ci, **caractérisé en ce que** l'extrudeuse à vis (12) comprend plus de deux vis (22) situées dans des chambres de communication distribuées de manière radiale autour d'un axe commun (26) et s'étendant avec l'axe de chaque vis parallèle à l'axe commun (26) et **en ce que** les matériaux délivrés à l'extrudeuse à vis (12) consistent essentiellement en
a) un poly(siloxane) ayant plus de 40 motifs siloxane choisis dans le groupe consistant en les poly(siloxanes) à terminaison bloquée trialkylsilyle, les poly(siloxanes) ayant au moins un groupe alcényle, hydroxyle ou hydrolysable lié au silicium,
b) un matériau de charge renforçante comprenant l'un quelconque parmi la silice finement divisée, le carbonate de calcium, la poudre de quartz, l'hydroxyde d'aluminium, le silicate de zirconium, la terre de diatomées et le dioxyde de titane,
c) un agent hydrophobant choisi dans le groupe consistant en les disilazanes et les poly(diorganosiloxanes) de 40 motifs siloxane au maximum ayant des groupes hydroxyle ou amino liés au silicium, et
d) de l'eau et/ou
e) le produit formé en mélangeant deux éléments quelconques ou plus parmi a), b), c) et d).

21. Procédé selon l'une quelconque des revendications précédentes, **caractérisé en outre en ce que** les matériaux délivrés depuis l'orifice de sortie (14) de l'extrudeuse sont en outre combinés avec d'autres matériaux, comprenant par exemple des agents de durcissement, des catalyseurs, des inhibiteurs, des plastifiants, des diluants et des charges non renforçantes pour fournir un produit durcissable.
